# FASCICULE DE BREVET EUROPEEN

(11) **EP 1 397 644 B1**
(45) Date de publication et mention de la délivrance du brevet: **12.08.2009**
(21) Numéro de dépôt: 02753117.7
(22) Date de dépôt: 17.06.2002
(51) Int. Cl.: G01D 1/00

(54) **DISPOSITIF DE FIXATION, PROTECTION ET ETANCHEITE POUR CAPTEURS**
VORRICHTUNG ZUR BEFESTIGUNG, DICHTUNG UND ZUM SCHUTZ VON SENSOREN
DEVICE FOR FASTENING, PROTECTING AND SEALING SENSORS

(30) Priorité: 18.06.2001 FR 0108072
(43) Date de publication de la demande: 17.03.2004
(73) Titulaire: Audit Conseil Efficacite Strategie Environnement et Developpement (Sarl), 91250 Saintry (FR); Thurot, Philippe Jean Louis, 91250 Saintry (FR)
(72) Inventeur: THUROT, Philippe, Jean, Louis, F-91250 Saintry (FR)
(74) Mandataire: Catherine, Alain
(86) Numéro de dépôt international: PCT/FR2002/002087
(87) Numéro de publication internationale: WO 2002/103293

(56) Documents cités:
- CA-A- 1 128 773
- DE-A- 2 828 995
- DE-U- 9 317 205
- US-A- 5 669 263

## Description

La présente invention concerne un dispositif de protection étanche et de fixation de capteurs assurant une parfaite intégration de ce capteur dans le - dispositif et une parfaite étanchéité du contact électrique et de la connexion de ce capteur avec le milieu extérieur ; que ce milieu soit liquide ou constitué par des environnements boueux, organiques, fibreux et éventuellement très humides.

Sur les capteurs actuels qui sont amenés à fournir des signaux électriques, il y a toujours la nécessité d'une parfaite étanchéité entre le capteur et le milieu extérieur. Le fait que ce milieu puisse être soit très humide, soit très corrosif, nécessite une parfaite étanchéité du capteur avec le milieu extérieur afin d'éviter le risque d'une dégradation des électrodes de la connectique et éviter le risque de court-circuit.

En règle général, le capteur lui même est étanche.

Le fait de devoir également placer le capteur à une certaine profondeur et dans des milieux difficiles où le capteur risque d'être détruit au contact avec d'autres produits ou matériels présents dans ce milieu, nécessite de pouvoir également protéger le capteur contre tout risque de dégradation.

A ce jour, il a toujours été particulièrement difficile d'assurer, à la fois, une protection parfaite de ce type de capteur et de disposer d'un dispositif étanche, compact et pouvant être utilisé quel que soit l'environnement dans lequel le capteur allait servir (exemple, d'un capteur pouvant être successivement immergé dans un environnement liquide puis utilisé dans un environnement boueux ou fibreux ou dans un tas de déchets).

Le dispositif selon l'invention permet de remédier à ces inconvénients en proposant un même dispositif d'insertion et de protection du capteur pouvant être utilisé dans des environnements très difficiles et variés, même humides sinon secs voire liquides, et pour des applications très différentes.

Le dispositif selon l'invention comporte selon une première caractéristique, deux pièces usinées distinctes pouvant se visser l'une dans l'autre et dans lesquelles sont insérés le capteur et sa connexion électrique.

Ce capteur comprend une tête formant l'organe de mesure du capteur, une partie arrière constituant un dispositif de connexion, une partie intermédiaire filetée interposée entre la tête et la partie arrière, et un câble relié au dispositif de connexion.

La première pièce est usinée et à la forme d'un doigt de gant évidé dans sa partie interne, permettant l'insertion par vissage de la partie intermédiaire du capteur lui-même.

Cette première pièce usinée présente une extrémité avant effilée qui est faite pour faciliter la pénétration possible du dispositif dans le milieu où le capteur sera placé ou enfoncé.

La pièce est évidée à l'intérieur afin que soit formée une chambre de mesure permettant l'insertion de la tête du capteur et sa mise en contact possible avec le milieu extérieur.

Pour que le capteur soit, au travers de sa chambre, en contact avec le milieu extérieur, la partie amont de l'extrémité avant de cette pièce effilée, est de forme cylindrique. Cette forme cylindrique est rendue nécessaire pour permettre le perçage de la pièce usinée à ce niveau et plus précisément afin d'éviter que les forêts utilisés pour ce perçage, ne dérapent sur la pièce usinée. Cette pièce est donc percée à ce niveau, de part et d'autre de cette partie cylindrique, permettant ainsi que la chambre de mesure intérieure où est insérée la tête du capteur, soit mise en contact avec le milieu extérieur et donc que la tête du capteur soit elle-même en contact avec le milieu extérieur.

Cette pièce usinée est également taraudée extérieurement à son extrémité arrière opposée au bout effilé. Le taraudage permet le vissage du capteur par sa partie intermédiaire filetée et sa fixation à la pièce usinée.

Entre la chambre de mise en contact avec le milieu extérieur et le taraudage, une butée est usinée permettant d'assurer une étanchéité entre le capteur, le joint d'étanchéité du capteur et le milieu extérieur.

En effet, le capteur se visse et vient se bloquer sur sa butée. Le vissage vient serrer le joint d'étanchéité qui est lui-même écrasé entre la pièce usinée et le capteur.

Cette pièce usinée est également filetée extérieurement à son extrémité arrière. Le filetage sert à visser la première pièce usinée avec son capteur à la seconde pièce usinée.

La seconde pièce est de forme tubulaire et est percée suivant son axe longitudinal, de part et d'autre, sur toute sa longueur, pour créer une chambre d'isolement du dispositif de connexion du capteur.

Le dispositif de connexion est disposé dans cette chambre d'isolement, le câble sortant de cette chambre par une extrémité arrière de la deuxième pièce opposée à la première pièce.

La connectique du capteur est fixée sur la partie intermédiaire du capteur, elle-même solidaire de la tête qui est insérée dans la chambre de mesure de la première pièce usinée.

La seconde pièce usinée est taraudée sur une partie avant afin de pouvoir venir se visser sur la première pièce usinée, assurant également, à ce niveau, une parfaite étanchéité grâce à une colle ou un joint d'étanchéité.

L'extrémité arrière de la seconde pièce usinée est également taraudée ce qui permet d'insérer une possible canne de fixation ou un raccord ou une connexion étanche ou un presse-étoupe au bout de cette seconde pièce usinée.

Le vissage du capteur à la première pièce usinée, l'insertion de la connectique du capteur dans la chambre d'isolement de la seconde pièce, et le vissage de la seconde pièce usinée à la première pièce usinée, font du dispositif de protection du capteur un ensemble très compact, en un seul bloc, assurant une parfaite protection étanche de la connectique du capteur et une protection du capteur et de sa connectique, tout en permettant un contact de la tête du capteur avec le milieu extérieur.

Selon un premier mode privilégié de réalisation de l'invention, l'ensemble des deux pièces usinées peut être intégré au bout d'une canne, au bout de laquelle un raccord, une connectique étanche ou un presse étoupe étanche assure la fixation et le passage étanche du câble du capteur à l'extrémité de la canne opposée au capteur. La canne permet d'enfoncer le capteur à une profondeur dans le milieu au sein duquel sera réalisée la mesure.

Selon un second mode de réalisation, le câble de transmission du signal fournit par le capteur, peut sortir directement de la chambre de protection, un presse-étoupe ou un raccord ou une connexion étanche directement fixée au dispositif assurant la fixation et le passage étanche au bout de la seconde pièce usinée, sans qu'aucune canne ne soit nécessaire. L'étanchéité est alors assurée par le raccord, la connexion étanche ou le presse-étoupe.

La mesure fournie par le capteur s'effectue alors simplement en descendant le capteur à la profondeur voulue grâce au câble électrique de transmission du signal du capteur lui même.

Selon des modes particuliers de réalisation, le bout effilé de la première pièce usinée peut être plus ou moins pointu ; améliorant la pénétration du capteur, dans le milieu où le dispositif sera enfoncé.

Les deux pièces usinées sont fabriquées de façon à être les moins larges possibles afin de faciliter la pénétration de l'ensemble du dispositif dans le milieu.

Les dessins annexés illustrent l'invention.

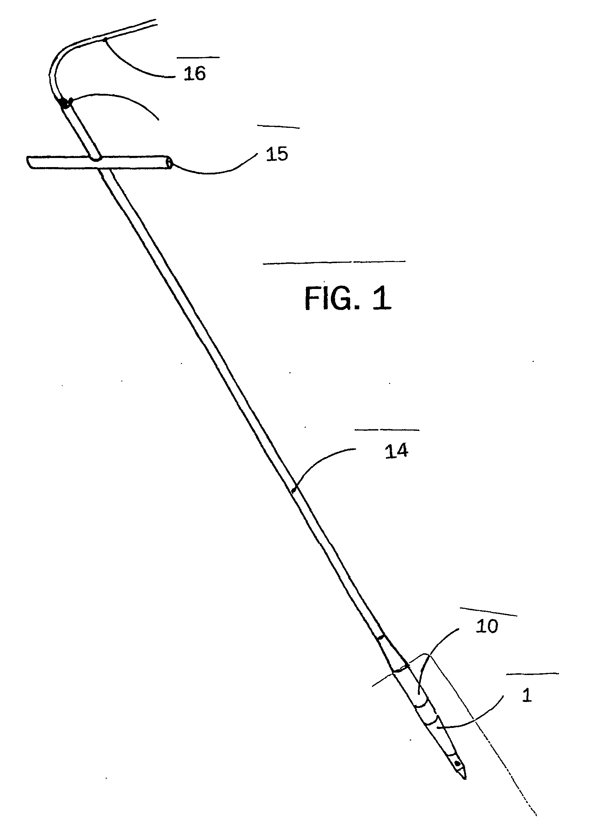

La figure 1 représente une vue du dispositif de l'invention avec sa canne et le câble électrique permettant la transmission du signal lié au capteur.

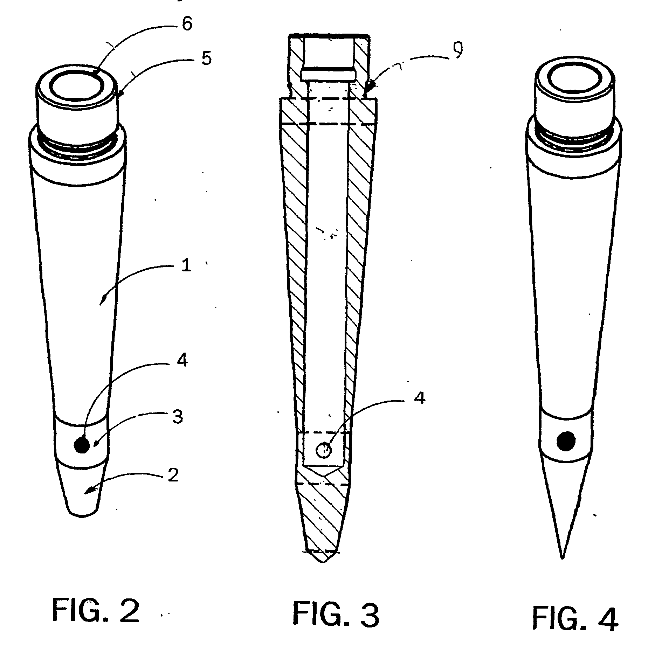

La figure 2 représente une vue générale de la première pièce usinée.
La figure 3 représente une coupe de la première pièce usinée.
La figure 4 représente une variante en vue générale de la première pièce usinée.

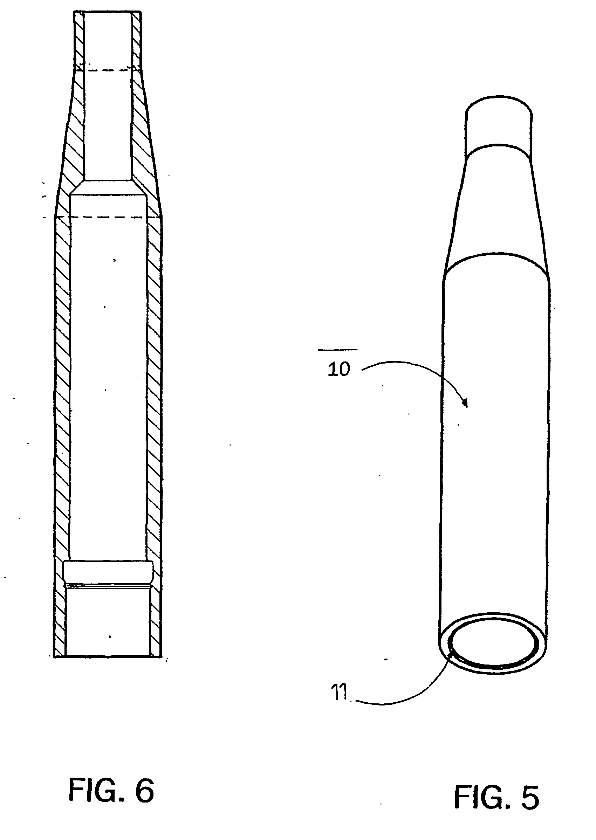

La figure 5 représente une vue générale de la seconde pièce usinée.
La figure 6 représente une coupe de la seconde pièce usinée.

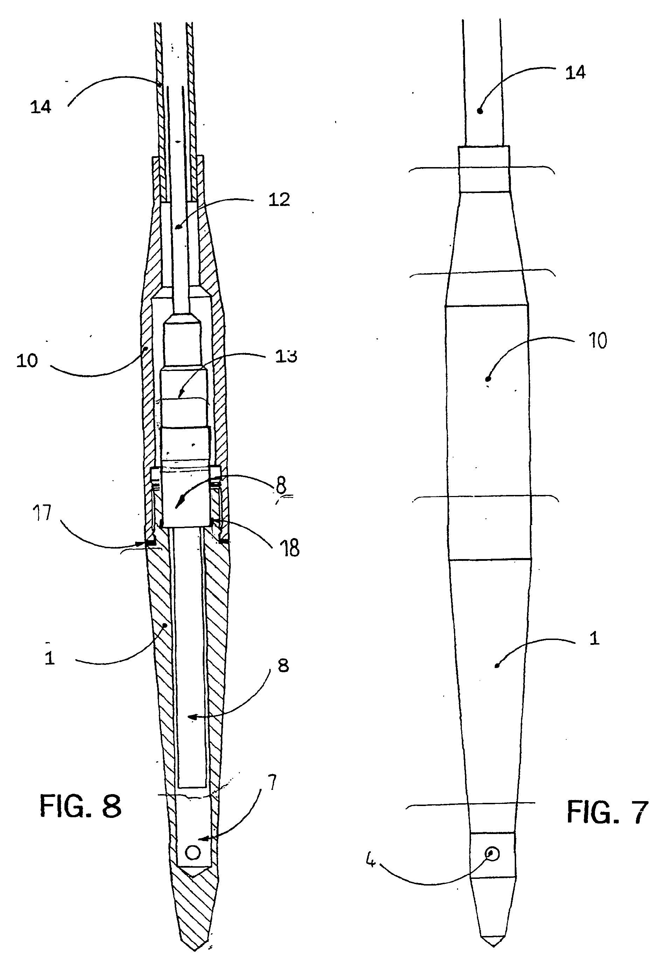

La figure 7 représente une vue générale des deux pièces usinées vissées l'une à l'autre.
La figure 8 représente une coupe du dispositif associant les deux pièces usinées et vissées l'une à l'autre, dans lequel le capteur et la connectique sont insérés.

En référence à ces dessins, le dispositif comporte une première pièce usinée (1) ayant la forme d'un doigt de gant, dont une extrémité avant plus effilée comprend une partie cylindrique (3) percée de part et d'autre par des orifices (4), prolongée par une partie terminale en forme de pointe (2).

La pièce comprend une extrémité arrière opposée à son extrémité avant présentant la forme d'un cylindre évidé, portant à la fois un filetage extérieur (5) et un taraudage (6) intérieur.

La pièce usinée (1) est creuse à l'intérieur, définissant une chambre de mesure (7) dans laquelle est insérée la tête du capteur, cette chambre (7) permettant la mise en contact de la tête du capteur (8) avec le milieu extérieur.

La chambre de mesure (7) présente une forme générale cylindrique, d'axe s'étendant suivant la direction longitudinale de la première pièce (1), débouchant dans la partie évidée de l'extrémité arrière cylindrique. Le diamètre intérieur de la chambre de mesure (7) est inférieur au diamètre intérieur de la première extrémité. La partie évidée de l'extrémité arrière de la première pièce présente aussi un épaulement axial (9) entourant l'extrémité de la chambre de mesure.

La partie intermédiaire filetée du capteur est engagée dans la partie arrière évidée de la première pièce et vient en butée sur l'épaulement axial (9). Un joint d'étanchéité (18) est interposé entre cette partie intermédiaire et une gorge ménagée dans une face intérieure de l'extrémité arrière de la première pièce.

Il est à noter que la partie intermédiaire du capteur est cylindrique, de diamètre plus large que la tête du capteur.

La première pièce (1) présente une partie centrale en tronc de cône, disposée entre les extrémités avant et arrière, le tronc de cône convergeant vers l'extrémité avant. L'extrémité arrière de la première pièce présente un diamètre légèrement inférieur à celui de la base du tronc de cône, un épaulement axial étant ainsi ménagé autour de ladite extrémité arrière, sur une face axiale du tronc de cône.

La deuxième pièce (10) est de forme générale allongée, cylindrique, creuse et définit une chambre d'isolement cylindrique, d'axe s'étendant suivant la direction longitudinale de la deuxième pièce.

La seconde pièce usinée (10) présente une extrémité avant évidée et taraudée intérieurement (11), permettant le vissage de cette deuxième pièce usinée sur l'extrémité arrière de la première pièce en doigt de gant (1). La seconde pièce peut ainsi être assemblée à la première et retirée si il est nécessaire d'extraire le capteur.

Le diamètre extérieur de la deuxième pièce correspond au diamètre de la base du tronc de cône. L'extrémité avant de la deuxième pièce vient en butée sur l'épaulement ménagé autour de l'extrémité avant de la première pièce. Un joint (17) est interposé entre l'épaulement et la deuxième pièce. On notera que les première et deuxième pièces assemblées forment ainsi un ensemble en forme de cigare qui s'insère facilement dans des milieux divers.

Elle présente également une extrémité arrière opposée à l'extrémité avant, de forme cylindrique, de diamètre inférieur au diamètre de la deuxième pièce, une partie intermédiaire en tronc de cône joignant cette extrémité arrière au reste de la deuxième pièce.

La chambre d'isolement débouche d'un côté dans la partie évidée de l'extrémité avant de la deuxième pièce, et d'un autre côté opposé dans une ouverture cylindrique pratiquée dans l'extrémité arrière de la deuxième pièce. L'ouverture cylindrique présente un diamètre inférieur au diamètre de la chambre d'isolement.

Le dispositif de connexion (13) du capteur est disposé dans la chambre d'isolement, le câble (12) étant raccordé par une extrémité à ce dispositif de connexion (13) et s'étendant à travers l'ouverture de l'extrémité arrière de la deuxième pièce.

Selon un premier mode particulier de réalisation, le dispositif peut comporter une canne (14) comprenant une extrémité filetée vissée dans l'ouverture située à l'arrière de la deuxième pièce (10). Cette canne (14) comprend des poignées soudées à la canne (15) pour permettre une meilleure tenue de celle-ci en vue de la pénétration du dispositif dans le milieu au sein duquel la mesure est souhaitée. Cette canne (14) présente un canal intérieur débouchant dans la chambre d'isolement. Le câble (12) s'étend le long de ce canal intérieur et sort par une extrémité de la canne opposée au capteur. Un raccord, une connexion étanche ou un presse étoupe (16) assure à la fois la fixation et le passage étanche du câble (12) à la sortie de la canne (14).

Selon un autre mode de réalisation, le dispositif ne comporte pas de canne mais simplement un raccord de fixation du câble, une connexion étanche ou un presse étoupe (16) insérée dans l'ouverture de l'extrémité arrière de la deuxième pièce.

Selon une variante non illustrée, la canne peut comporter plusieurs orifices (4) au niveau de la première pièce usinée (un, deux ou plus) ; favorisant un meilleur contact du capteur (8) avec le milieu extérieur.

A titre d'exemple illustratif et non limitatif, le dispositif aura un diamètre de l'ordre de trois centimètres de largeur, trente centimètres de longueur hors canne et les orifices de mise en contact du capteur avec le milieu extérieur auront un diamètre de 0,5 cm. La canne pourra avoir une longueur de 2 mètres.

La canne et les deux pièces usinées sont de préférence conçues dans des matériaux adaptés à résister à l'agressivité et la corrosivité ou la température élevée présente dans le milieu extérieur : un matériau plastique, métallique ou composite.

On comprend donc bien que le dispositif de protection comprend une chambre de mesure dans laquelle est insérée la tête du capteur, une chambre d'isolement protégeant le dispositif de connexion et des moyens d'étanchéité entre la chambre de mesure et la chambre d'isolement constitués par la partie intermédiaire du capteur et par le joint d'étanchéité.

Le dispositif selon l'invention est particulièrement destiné à l'insertion, la fixation et, l'étanchéité de capteurs de mesure des gaz (oxygène, gaz carbonique, autres gaz ...), de l'humidité, du PH et d'autres paramètres dont la mesure est souhaitée ; et à la mesure de ces gaz, de l'humidité, du PH et des autres paramètres, dans différents milieux et notamment les milieux liquides, humides, éventuellement solides, fibreux, boueux, granuleux, et notamment dans le domaine du traitement de l'eau et des déchets et le compostage.

## Revendications

1. Dispositif de protection pour un capteur (8) comprenant un organe de mesure, un dispositif de connexion (13) et une partie intermédiaire interposée entre l'organe de mesure et le dispositif de connexion (13), le dispositif de protection comprenant une première pièce (1) formant une chambre de mesure (7) dans laquelle est inséré l'organe de mesure, une deuxième pièce (10) fixée de façon amovible sur la première et formant une chambre d'isolement dans laquelle est disposée le dispositif de connexion (13), et des moyens d'étanchéité entre la chambre de mesure et la chambre d'isolement, la première pièce (1) étant percée à une extrémité avant par un trou (4) mettant en communication la chambre de mesure (7) avec l'extérieur, cette chambre étant ouverte à une extrémité à l'arrière de la première pièce (1) opposée à l'extrémité avant, la deuxième pièce (10) étant fixée à cette extrémité arrière, les moyens d'étanchéité entre la chambre de mesure (7) et la chambre d'isolement comprenant la partie intermédiaire du capteur engagée dans l'extrémité arrière de la première pièce (1), **caractérisé, en ce que** l'extrémité arrière ouverte de la première pièce (1) présente un taraudage intérieur (6), la partie intermédiaire du capteur (8) portant un filetage extérieur complémentaire du taraudage intérieur (6) et étant vissée dans l'extrémité arrière de la première pièce (1).

2. Dispositif de protection selon la revendication 1, **caractérisé en ce que** la première pièce (1) présente une forme générale en doigt de gant.

3. Dispositif de protection selon la revendication 1 ou 2, **caractérisé en ce que** les moyens d'étanchéité comprennent un joint d'étanchéité (18) interposé entre la partie intermédiaire du capteur et l'extrémité arrière de la première pièce (1).

4. Dispositif de protection selon l'une quelconque des revendications 1 à 3, **caractérisé en ce que** l'extrémité arrière de la première 3 pièce (1) présente un filetage extérieur (5), la chambre d'isolement étant cuverte à une extrémité avant de la deuxième pièce (10), la dite extrémité avant portant un taraudage intérieur (11) complémentaire du filetage extérieur (5) et étant vissée sur l'extrémité arrière de la première pièce (1).

5. Dispositif de protection, selon la revendication 4, **caractérisée en ce que** le dispositif comprend une canne (14) fixée à une extrémité arrière de la deuxième pièce opposée à l'extrémité avant.

6. Dispositif de protection selon la revendication 5, pour un capteur (8) comprenant un câble fixé au dispositif de connexion, **caractérisé en ce que** la canne (14) présente un canal intérieur creux, la chambre d'isolement étant ouverte à son extrémité arrière et communiquant par celle-ci avec le canal intérieur de la canne (14), le câble du capteur sortant de la chambre d'isolement par l'extrémité arrière et s'étendant le long du canal intérieur de la canne (14).

7. Dispositif de protection selon la revendication 4, pour un capteur (8) comprenant un câble fixé au dispositif de connexion, **caractérisé en ce que** le câble du capteur sort de la chambre d'isolement par une ouverture située à une extrémité arrière de la deuxième pièce (10) opposée à l'extrémité avant, un organe d'étanchéité (16) assurant t'étanchéité entre le câble et l'ouverture.

8. Dispositif de protection selon l'une quelconque des revendications 1 à 7 **caractérisé en ce que** l'extrémité avant de la première pièce (1) comprend une partie terminale effilée (2).

## Claims

1. A device for the protection of a sensor (8) comprising a measuring element, a connecting device (13) and an intermediate portion interposed between the measuring element and the connecting device (13), the protection device comprising a first section (1) forming a measuring chamber (7) in which is inserted the measuring element, a second section (10) removably fastened to the first section and forming an isolation chamber in which is arranged the connecting device (13), and sealing means between the measuring chamber and the isolation chamber, the first section (1) being pierced at a front end by a hole (4) placing the measuring chamber (7) in communication with the outside, said chamber being open at one end at the rear of the first section (1) opposite the front end, the second section (10) being fastened to said rear end, the sealing means between the measuring chamber (7) and the isolation chamber comprising the intermediate portion of the sensor inserted in the rear end of the first section (1), **characterized in that** the open rear end of the first section (1) has an internal thread (6), the intermediate portion of the sensor (8) carrying an external thread mating with the internal thread (6) and being screwed to the rear end of the first section (1).

2. A protection device according to claim 1, **characterized in that** the first section (1) has the general shape of a glove finger.

3. A protection device according to claim 1 or 2, **characterized in that** the sealing means comprise a sealing gasket (18) interposed between the intermediate portion of the sensor and the rear end of the first section (1).

4. A protection device according to any one of claims 1 to 3, **characterized in that** the rear end of the first section (1) has an external thread (5), the isolation chamber being open at a front end of the second section (10), said front end carrying an internal thread (11) mating with the external thread (5) and being screwed to the rear end of the first section (1).

5. A protection device according to claim 4, **characterized in that** the device comprises a rod (14) fastened to a rear end of the second section opposite the front end.

6. A protection device according to claim 5, for a sensor (8) comprising a cable attached to the connecting device, **characterized in that** the rod (14) has a hollow inner channel, the isolation chamber being open at its rear end and communicating through the latter with the inner channel of the rod (14), the cable of the sensor going out of the isolation chamber through the rear end and extending along the inner channel of the rod (14).

7. A protection device according to claim 4, for a sensor (8) comprising a cable attached to the connecting device, **characterized in that** the cable of the sensor goes out of the isolation chamber through an opening located at a rear end of the second section (10) opposite the front end, a sealing element (16) providing the seal between the cable and the opening.

8. A protection device according to any one of claims 1 to 7, **characterized in that** the front end of the first section (1) comprises a tapered end portion (2).

## Patentansprüche

1. Schutzvorrichtung für einen Sensor (8), der ein Messorgan, eine Anschlussvorrichtung (13) und einen Zwischenabschnitt umfasst, der zwischen dem Messorgan und der Anschlussvorrichtung (13) zwischengelegt ist, wobei die Schutzvorrichtung ein erstes Bauteil (1), das eine Messkammer (7) bildet, in die das Messorgan eingesetzt ist, ein zweites Bauteil (10), das abnehmbar auf dem ersten befestigt ist und eine Isolierkammer bildet, in der die Anschlussvorrichtung (13) angeordnet ist, und Dichtungsmittel zwischen der Messkammer und der Isolierkammer umfasst, wobei das erste Bauteil (1) an einem vorderen Ende durch ein Loch (4) durchbohrt ist, das die Messkammer (7) mit der Außenseite in Verbindung bringt, wobei diese Kammer an einem Ende im hinteren Bereich des ersten Bauteils (1), das dem vorderen Ende entgegengesetzt ist, offen ist, wobei das zweite Bauteil (10) an diesem hinteren Ende befestigt ist, wobei die Dichtungsmittel zwischen der Messkammer (7) und der Isolierkammer den Zwischenabschnitt des Sensors umfassen, der im hinteren Ende des ersten Bauteils (1) in Eingriff ist, **dadurch gekennzeichnet, dass** das offene hintere Ende des ersten Bauteils (1) ein Innengewinde (6) aufweist, wobei der Zwischenabschnitt des Sensors (8) ein Außengewinde trägt, das zum Innengewinde (6) passt und in das hintere Ende des ersten Bauteils (1) geschraubt ist.

2. Schutzvorrichtung nach Anspruch 1, **dadurch gekennzeichnet, dass** das erste Bauteil (1) eine allgemeine Form einer Tauchhülse aufweist.

3. Schutzvorrichtung nach Anspruch 1 oder 2, **dadurch gekennzeichnet, dass** die Dichtungsmittel eine Dichtung (18) umfassen, die zwischen dem Zwischenabschnitt des Sensors und dem hinteren Ende des ersten Bauteils (1) zwischengelegt ist.

4. Schutzvorrichtung nach einem der Ansprüche 1 bis 3, **dadurch gekennzeichnet, dass** das hintere Ende des ersten Bauteils (1) ein Außengewinde (5) aufweist, wobei die Isolierkammer an einem vorderen Ende des zweiten Bauteils (10) offen ist, wobei das vordere Ende ein Innengewinde (11) trägt, das zu dem Außengewinde (5) passt und auf das hintere Ende des ersten Bauteils (1) geschraubt ist.

5. Schutzvorrichtung nach Anspruch 4, **dadurch gekennzeichnet, dass** die Vorrichtung ein Rohr (14) umfasst, das an einem hinteren Ende des dem vorderen Ende entgegengesetzten zweiten Bauteils befestigt ist.

6. Schutzvorrichtung nach Anspruch 5 für einen Sensor (8), der ein Kabel umfasst, das an der Anschlussvorrichtung befestigt ist, **dadurch gekennzeichnet, dass** das Rohr (14) einen hohlen Innenkanal aufweist, wobei die Isolierkammer an ihrem hinteren Ende offen ist und durch dieses mit dem Innenkanal des Rohrs (14) in Verbindung steht, wobei das Kabel des Sensors durch das hintere Ende aus der Isolierkammer herausführt und sich entlang des Innenkanals des Rohrs (14) erstreckt.

7. Schutzvorrichtung nach Anspruch 4 für einen Sensor (8), der ein Kabel umfasst, das an der Anschlussvorrichtung befestigt ist, **dadurch gekennzeichnet, dass** das Kabel des Sensors durch eine Öffnung, die an einem hinteren Ende des zweiten Bauteils (10) liegt, das dem vorderen Ende entgegengesetzt ist, aus der Isolierkammer hinausführt, wobei ein Dichtungsorgan (16) die Dichtheit zwischen dem Kabel und der Öffnung gewährleistet.

8. Schutzvorrichtung nach einem der Ansprüche 1 bis 7, **dadurch gekennzeichnet, dass** das vordere Ende des ersten Bauteils (1) einen sich verjüngenden Endabschnitt (2) umfasst.
